# EUROPÄISCHE PATENTSCHRIFT

(11) **EP 1 117 916 B1**
(45) Veröffentlichungstag und Bekanntmachung des Hinweises auf die Patenterteilung: **09.10.2002**
(21) Anmeldenummer: 99944255.1
(22) Anmeldetag: 01.07.1999
(51) Int. Cl.: F02D 41/02, F01N 3/08

(54) **REGENERATIONSVERFAHREN FÜR EINEN NOx-SPEICHERKATALYSATOR EINER BRENNKRAFTMASCHINE**
REGENERATION METHOD FOR A NOx STORAGE CATALYST PERTAINING TO AN INTERNAL COMBUSTION ENGINE
PROCEDE DE REGENERATION D'UN CATALYSEUR A ACCUMULATION DE NOx D'UN MOTEUR A COMBUSTION INTERNE

(30) Priorität: 29.09.1998 DE 19844745
(43) Veröffentlichungstag der Anmeldung: 25.07.2001
(73) Patentinhaber: SIEMENS AKTIENGESELLSCHAFT, 80333 München (DE)
(72) Erfinder: SCHÜRZ, Willibald, D-93089 Aufhausen (DE)
(86) Internationale Anmeldenummer: DE9901990
(87) Internationale Veröffentlichungsnummer: WO00019074

(56) Entgegenhaltungen:
- EP-A- 0 580 389
- US-A- 5 595 060

## Beschreibung

Die Erfindung betrifft ein Regenerationsverfahren für einen NOx-Speicherkatalysator einer Brennkraftmaschine gemäß dem Oberbegriff des Hauptanspruchs.

Um den Kraftstoffverbrauch von Kraftfahrzeugen mit ottomotorischem Antrieb weiter zu reduzieren, kommen immer häufiger Brennkraftmaschinen zum Einsatz, die mit magerem Gemisch betrieben werden. Zur Erfüllung der geforderten Abgasemissionsgrenzwerte ist bei solchen Brennkraftmaschinen eine spezielle Abgasnachbehandlung notwendig. Dazu werden NOx-Speicherkatalysatoren verwendet. Diese NOx-Speicherkatalysatoren sind aufgrund ihrer Beschichtung während einer Speicherphase in der Lage, NOx-Verbindungen aus dem Abgas zu adsorbieren, die bei magerer Verbrennung entstehen. Während einer Regenerationsphase werden die adsorbierten bzw. gespeicherten NOx-Verbindungen unter Zugabe eines Reduktionsmittels in unschädliche Verbindungen umgewandelt. Als Reduktionsmittel für magerbetriebene Otto-Brennkraftmaschinen können CO, H₂ und HC (Kohlenwasserstoffe) verwendet werden. Diese werden durch kurzzeitigen Betrieb der Brennkraftmaschine mit einem fetten Gemisch erzeugt und dem NOx-Speicherkatalysator als Abgaskomponenten zur Verfügung gestellt, wodurch die gespeicherten NOx-Verbindungen im Katalysator abgebaut werden.

Der Speicherwirkungsgrad eines solchen NOx-Speicherkatalysators hängt von zahlreichen, in der Literatur beschriebenen Einflußgrößen ab. Eine primäre Einflußgröße stellt neben der Katalysatortemperatur insbesondere der Katalysatorbeladungsgrad dar, d.h. mit zunehmender Dauer der Magerphase und daraus resultierenden Speicherung von NOx nimmt der Speicherwirkungsgrad kontinuierlich ab, so daß unter Berücksichtigung der Abgasgrenzwerte oder weiterer Betriebsbedingungen eine Umschaltung in den Fett- d.h. in den Regenerationsbetrieb notwendig wird. Die erforderliche Dauer des Fettbetriebes zur Regeneration hängt im wesentlichen von der gespeicherten NOx-Masse und dem O₂ Speichervermögen des Katalysators ab.

Weil der Übergang vom Magerbetrieb zum Fettbetrieb bzw. vom Fettbetrieb zum Magerbetrieb der Brennkraftmaschine zur Vermeidung von NOx-Rohemissionsspitzen sprungartig erfolgen muß, wird die Luftzahländerung vorzugsweise durch Veränderung der Einspritzmenge erreicht. Die mit einer Luftzahländerung über Einspritzmengenänderung verbundene Drehmomentänderung ist durch einen Zündwinkeleingriff zu kompensieren, um das Fahrverhalten eines derartigen Fahrzeuges nicht nachteilig zu beeinflussen. Die erforderliche Verstellung des Zündwinkels in Richtung Spät während des Fettbetriebes führt zu einem deutlichen Anstieg der Abgastemperatur. Dies ist für ein derartiges Abgasnachbehandlungskonzept von besonderer Bedeutung, da die NOx-Speicherkapazität stark temperaturabhängig ist. Die alleinige Zündwinkelverstellung zur Vermeidung von Drehmomentschwankungen kann also dazu führen, daß der für eine ausreichend hohe NOx-Speicherkapazität des NOx-Speicherkatalysators einzuhaltende Temperaturbereich überschritten wird.

Aus der EP 0 580 389 A1 ist ein Abgasreinigungsgerät für eine Brennkraftmaschine bekannt, bei welcher der durch SOx verunreinigte NOx Absorbient zu einem nahezu nicht verunreinigten Zustand zurückgewonnen wird, in dem der Betrieb der Brennkraftmaschine gesteuert wird. Dabei wird bei einer Temperatur, die größer als ein erster Grenzwert ist, der Sollwert für das Luft-/Kraftstoffverhältnis auf einen stöchiometrischen Wert geändert. Anschließend wird abgefragt, ob die Absorbertemperatur kleiner als ein zweiter Grenzwert ist und wenn dies der Fall ist, der Zündzeitpunkt verzögert. Ein Eingriff in die Zylinderfüllung in der Kombination mit einen Zündungseingriff zur Erzielung einer Drehmomentneutralität zu Beginn und zu Ende der Regenerationsphase ist in dieser Druckschrift nicht offenbart.

In DE 195 17 168 A1 und EP 0 687 809 A2 sind Verfahren und Vorrichtungen zur Steuerung des Drehmoments bei starker Veränderung der Luftzahl durch Verzögern des Zündzeitpunktes und Rückführen von Abgas beschrieben. Die Beeinflussung der Abgastemperatur und damit einhergehend der Katalysatortemperatur wird jedoch nicht berücksichtigt.

Der Erfindung liegt die Aufgabe zugrunde, ein Verfahren anzugeben, mit dem ein NOx-Speicherkatalysator für eine Brennkraftmaschine mit hohem Wirkungsgrad regeneriert werden kann.

Diese Aufgabe wird durch die in Anspruch 1 definierte Erfindung gelöst.

In Abhängigkeit der Temperatur des NOx-Speicherkatalysators werden während der Regenerationsphase unterschiedliche Steuermaßnahmen zur Erzielung einer Drehmomentneutralität beim Umschalten von Magerbetrieb auf Fettbetrieb bzw. von Fettbetrieb auf Magerbetrieb ausgewählt.

Liegt die Katalysatortemperatur unterhalb eines vorgegebenen Schwellenwertes, so ist ein alleiniger Zündungseingriff, d.h. eine Verstellung des Zündwinkels in Richtung spät vorteilhaft, da sich dadurch ein deutlicher Anstieg der Abgastemperatur und damit einhergehend eine Erhöhung der Katalysatortemperatur einstellt. Die Verschiebung des Zündwinkels in Richtung spät kompensiert den durch den Sprung der Luftzahl von einem mageren auf einen zur Regeneration notwendigen fetten Wert auftretende Drehmomentänderung.

Bei hoher Last und hoher Drehzahl der Brennkraftmaschine liegt die Temperatur des NOx-Speicherkatalysators entweder schon in einem für eine hohe Speicherkapazität notwendigen Temperaturbereich oder sogar darüber, so daß in diesem Betriebsbereich neben einem Zündungseingriff auch ein Zylinderfüllungseingriff zur Vermeidung von Drehmomentschwankungen bei Luftzahlsprüngen durchgeführt wird.

Durch die gezielte Beeinflußung der Katalysatortemperatur über die Kombination von Zylinderfüllungs-und/oder -und/oder Zündungseingriff ist es möglich, die zu Beginn und zu Ende einer Regenerationsphase auftretenden Drehmomentschwankungen zu kompensieren und dabei die Katalysatortemperatur dennoch in einem für die Schadstoffspeicherung und Umwandlung günstigen Bereich zu halten.

Vorteilhafte Ausgestaltungen der Erfindung sind in den Unteransprüchen gekennzeichnet.

Die Erfindung wird nachfolgend unter Bezugnahme auf die Zeichnung näher erläutert. Es zeigt:
- Figur 1: eine schematische Darstellung einer Brennkraftmaschine mit einer NOx-Abgasnachbehandlunganlage,
- Figur 2: ein Diagramm, daß die Speicherkapazität des NOx-Speicherkatalysators in Abhängigkeit von der Katalysatortemperatur zeigt,
- Figur 3: und Figur 4 stationäre Motorbetriebskennfelder,
- Figur 5: Diagramme für den Verlauf des Verbrennungswirkungsgrades in Abhängigkeit von der Luftzahl bzw. von der Zündwinkelverstellung,
- Figur 6: zeitliche Verläufe von ausgewählten Größen bei einem kombinierten Zündungs- und Füllungseingriff und

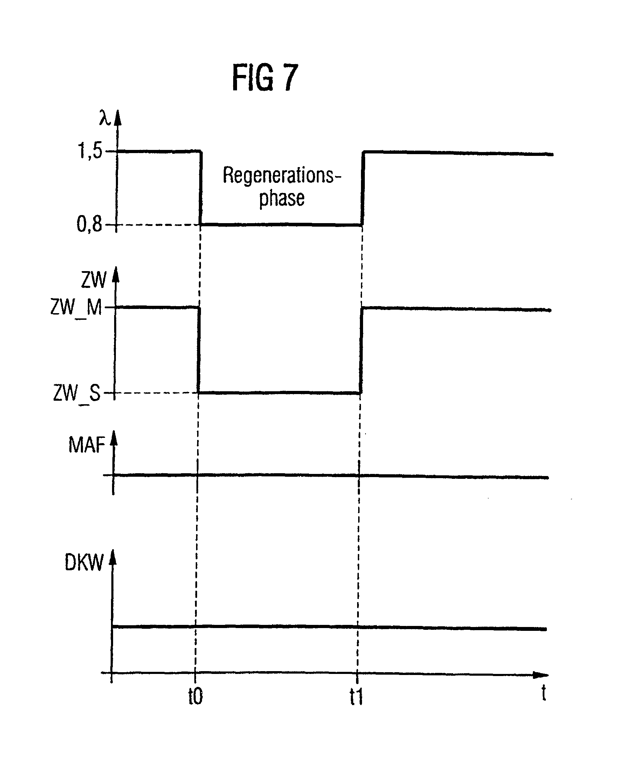

- Figur 7: zeitliche Verläufe von ausgewählten Größen bei einem alleinigen Zündungseingriff.

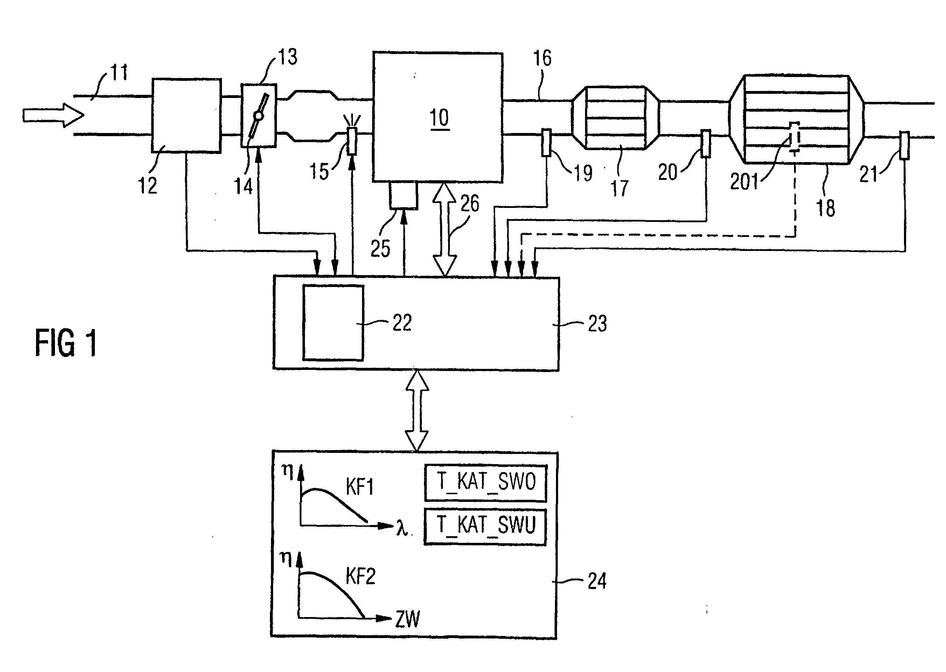

In Fig. 1 ist in Form eines Blockschaltbildes eine Mager-Brennkraftmaschine mit einer NOx-Abgasnachbehandlungsanlage gezeigt, bei der das erfindungsgemäße Verfahren angewendet wird. Dabei sind nur die Teile dargestellt, die zum Verständnis der Erfindung nötig sind.

Der Brennkraftmaschine 10 wird über einen Ansaugkanal 11 ein Luft-/Kraftstoffgemisch zugeführt. Im Ansaugkanal 11 sind in Strömungsrichtung der angesaugten Luft gesehen nacheinander ein Luftmassenmesser 12, ein Drosselklappenblock 13 mit einer Drosselklappe 14 und einem nicht dargestellten Drosselklappensensor zur Erfassung des Öffnungswinkels der Drosselklappe 14 und entsprechend der Zylinderanzahl ein Satz Einspritzventile 15 vorgesehen, von denen nur eines gezeigt ist. Das erfindungsgemäße Verfahren ist aber auch bei einer Brennkraftmaschine anwendbar, bei der der Kraftstoff direkt in die jeweiligen Zylinder eingespritzt wird (Direkteinspritzung).

Ausgangsseitig ist die Brennkraftmaschine 10 mit einem Abgaskanal 16 verbunden. In diesem Abgaskanal 16 ist eine Abgasnachbehandlungsanlage für mageres Abgas vorgesehen. Sie besteht aus einem nahe der Brennkraftmaschine 10 angeordneten 3-Wege-Katalysator 17, auch als Vorkatalysator bezeichnet und einem in Strömungsrichtung des Abgases dem Vorkatalysator 17 nachgeschalteten NOx-Speicherkatalysator 18.

Die Sensorik für die Abgasnachbehandlungsanlage beinhaltet einen Sauerstoffmeßaufnehmer 19 stromaufwärts des Vorkatalysators 17, einen Temperatursensor 20 im Verbindungsrohr zwischen Vorkatalysator 17 und NOx-Speicherkatalysator 18 nahe am Eintrittsbereich desselben und einen weiteren Sauerstoffmeßaufnehmer 21 stromabwärts des NOx-Speicherkatalysators 18.

Anstelle des Temperatursensors 20, der die Abgastemperatur erfasst und aus dessen Signal mittels eines Temperaturmodells die Temperatur des NOx-Speicherkatalysators berechnet werden kann, ist es auch möglich die NOx-Speicherkatalysatortemperatur unmittelbar zu messen. In der- Figur 1 ist mit strichlinierter Linie ein solcher Temperatursensor 201 eingezeichnet, der die Monolithtemperatur des NOx-Speicherkatalysators 18 mißt.

Als Sauerstoffmeßaufnehmer 19 wird vorzugsweise eine Breitband-Lambdasonde eingesetzt, welche in Abhängigkeit des Sauerstoffgehaltes im Abgas ein stetiges, z.B. lineares Ausgangssignal abgibt. Mit dem Signal dieser Breitband-Lambdasonde 19 wird die Luftzahl während des Magerbetriebes und während der Regenerationsphase mit fettem Gemisch entsprechend der Sollwertvorgaben eingeregelt. Diese Funktion übernimmt eine an sich bekannte Lambdaregelungseinrichtung 22, die vorzugsweise in eine den Betrieb der Brennkraftmaschine 10 steuernde Steuerungseinrichtung 23 integriert ist. Solche elektronischen Steuerungseinrichtungen, die in der Regel einen Mikroprozessor beinhalten und die neben der Kraftstoffeinspritzung und der Zündung noch eine Vielzahl weiterer Steuer- und Regelaufgaben, u.a. auch die Steuerung der Abgasnachbehandlungsanlage übernehmen, sind an sich bekannt, so daß im folgenden nur auf den im Zusammenhang mit der Erfindung relevanten Aufbau und dessen Funktionsweise eingegangen wird. Insbesondere ist die Steuerungseinrichtung 23 mit einer Speichereinrichtung 24 verbunden, in dem u.a. verschiedene Kennlinien bzw. Kennfelder und Schwellenwerte gespeichert sind, deren jeweilige Bedeutung anhand der Beschreibung der nachfolgenden Figuren noch näher erläutert wird.

Das Ausgangssignal des Luftmassenmessers 12 und die Signale des Drosselklappensensors, der Sauerstoffmeßaufnehmer 19, 21, des Temperatursensors 20 werden über entsprechende Verbindungsleitungen der Steuerungseinrichtung 23 zugeführt.

Zur Steuerung und Regelung der Brennkraftmaschine 10 ist die Steuerungseinrichtung 23 außer mit einer Zündeinrichtung 25 für das Luft-Kraftstoffgemisch über eine nur schematisch dargestellte Daten - und Steuerleitung 26 noch mit weiteren, nicht explizit dargestellten Sensoren z.B. für Drehzahl und Kühlmitteltemperatur der Brennkraftmaschine sowie mit weiteren Aktoren verbunden.

Zur Regelung des Kraftstoff-/Luftgemisches der Brennkraftmaschine im optimalen Lambda-Fenster während des stöchiometrischen Betriebs ist das Signal des nach dem NOx-Speicherkatalysator 18 angeordneten Sauerstoffmeßaufnehmers 21 als Führungssonde erforderlich. Als Sauerstoffmeßaufnehmer 21 dient vorzugsweise eine binäre Lambdasonde (2-Punkt-Lambdasonde) auf der Basis von Zirkonoxid ZrO2, die bei einem Lambdawert λ=1 bezüglich ihres Ausgangssignales eine Sprungcharakteristik aufweist. Dieses Sondensignal der nach dem NOx-Speicherkatalysator 18 angeordneten Lambdasonde wird auch zur Steuerung der Speicherregeneration und zur Adaption von Modellgrößen wie z.B. der Sauerstoff- bzw. NOx-Speicherkapazität des NOx-Speicherkatalysators 18 eingesetzt.

Die Temperatur des NOx-Speicherkatalysators 18, die zur verbrauchs- und emissionsoptimalen Steuerung des Systems erforderlich ist, wird mittels eines Temperaturmodells aus dem Sensorsignal des Temperatursensors 20 errechnet. Basierend auf diesem Meßsignal werden auch Katalysatorheiz- bzw. Katalysatorschutzmaßnahmen eingeleitet. Alternativ hierzu kann die Temperatur des NOx-Speicherkatalysators 18 auch direkt gemessen werden, indem ein Temperatursensor unmittelbar im Gehäuse desselben angeordnet wird.

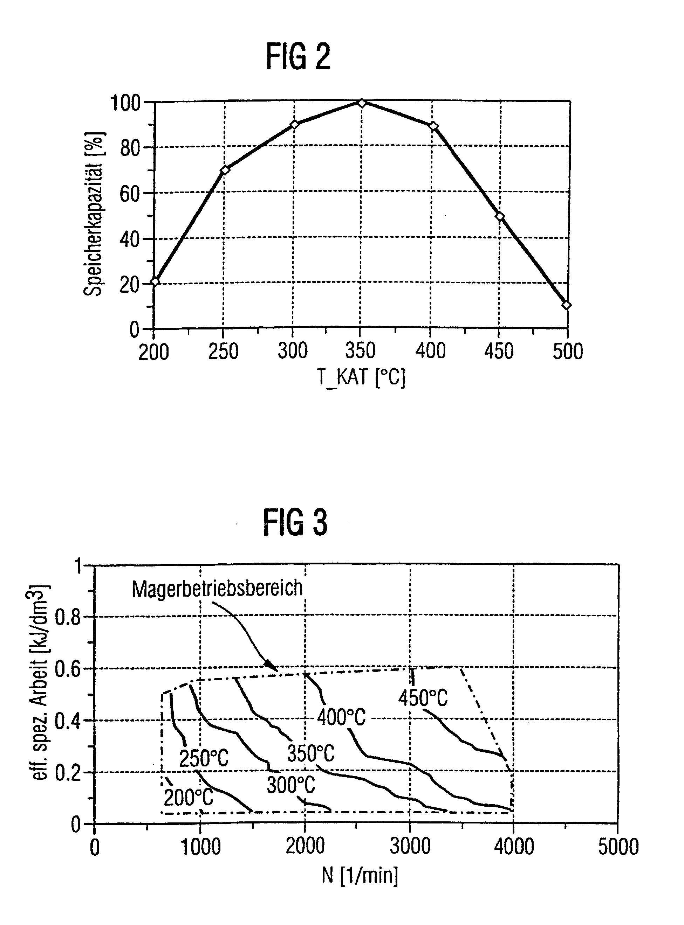

Das Diagramm nach Figur 2 zeigt einen typischen Verlauf der Speicherkapazität eines NOx-Speicherkatalysators in Abhängigkeit von der Katalysatortemperatur T_KAT. Er weist ein aktives Temperaturintervall von etwa 200°C bis 500°C auf. Die untere Grenze dieses Intervalls wird in erster Linie vom Oxidationsvermögen NO zu NO₂ beeinflußt. Die obere Grenze wird neben der thermischen Stabilität der gebildeten Nitrate auch von der Thermodynamik der NO₂-Bildungsreaktion beeinflußt.

Bei Temperaturen über 350°C verschiebt sich das Gleichgewicht der Reaktion von NO mit O₂ zu NO₂ auf die Seite der Ausgangsprodukte. Durch unmittelbares Einspeichern des am Edelmetallkontakt gebildeten NO₂ wird das Reaktionsprodukt aus dem Reaktionsgleichgewicht entfernt und damit das Gleichgewicht auf die Seite der Reaktionsprodukte verschoben. Um also eine möglichst hohe Speicherkapazität des NOx-Speicherkatalysators sicherzustellen, soll seine Temperatur in einem engen Bereich um 350°C liegen.

Der Magerbetriebsbereich einer Brennkraftmaschine ist einerseits durch die erzielbare Last der Brennkraftmaschine und andererseits durch die sich ergebenden Abgastemperaturen begrenzt.

In Figur 3 ist die effektive spezifische Arbeit, die aus der Umwandlung der chemischen Energie des Kraftstoffes in mechanische Energie resultiert, in Abhängigkeit der Drehzahl N der Brennkraftmaschine für verschiedene Abgastemperaturen dargestellt. Der Magerbetriebsbereich der Brennkraftmaschine ist mit strichpunktierter Linie eingezeichnet. Innerhalb des Bereiches sind Linien konstanter Abgastemperatur für Temperaturwerte von 200°C bis 450°C in Abständen von jeweils 50°c eingetragen.

Infolge der verdünnten Ladung im Magerbetrieb (Luftüberschuß bis zu 60%) läßt sich die effektive spezifische Arbeit nicht über 0,6 kJ/dm³ entsprechend 6 bar Mitteldruck steigern. Ist eine höhere Last der Brennkraftmaschine gefordert, muß auf Betrieb mit einer Luftzahl λ=1 oder auf Betrieb mit fettem Gemisch (λ<1) umgeschaltet werden. Insbesondere bei hohen Drehzahlen und Lasten im Magerbetrieb ist die Abgastemperatur so hoch, daß die NOx-Speicherfähigkeit des NOX-Speicherkatalysators stark abnimmt. Zusätzlich werden in diesem Betriebsbereich von der Brennkraftmaschine hohe NOx-Mengen produziert. Um ausreichende NOx-Konvertierungsgrade zu erzielen, ist eine hohe Katalysatorregenerationsfrequenz erforderlich.

In diesem Bereich wird deshalb bei einer Regeneration des NOx-Speicherkatalysators eine Drehmomentkompensation über einen kombinierten Zündungs- und Füllungseingriff bewirkt, da ein Zündungseingriff alleine eine zusätzliche, nachteilige Temperaturerhöhung des NOx-Speicherkatalysators zur Folge hätte.

Hingegen bei niedrigen Lasten und Drehzahlen ist die Abgastemperatur so niedrig, daß eine Erhöhung der NOx-Speicherkatalysatortemperatur gewünscht ist. In diesem Bereich wird deshalb die Drehmomentkompensation während der Regeneration durch einen alleinigen Zündungseingriff bewirkt.

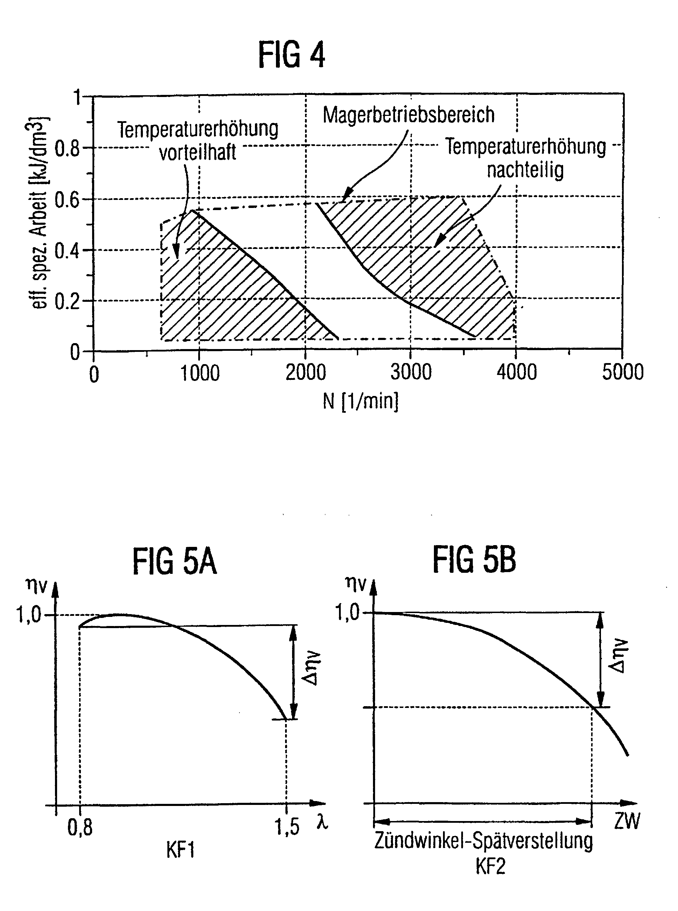

Es gibt also Magerbetriebsbereiche der Brennkraftmaschine, in denen eine Erhöhung der NOx-Speicherkatalysatortemperatur gewünscht ist oder vermieden werden muß. In das Diagramm nach Figur 4, das wieder die effektive spezifische Arbeit in Abhängigkeit der Drehzahl der Brennkraftmaschine zeigt, sind diese verschiedenen Bereiche innerhalb des Magerbetriebsbereiches der Brennkraftmaschine schraffiert eingezeichnet.

Abhängig von der Temperatur des NOx-Speicherkatalysators 18 wird entweder ein kombinierter Zündungs-und Füllungseingriff oder ein alleiniger Zündungseingriff durchgeführt.

Als Kriterium, welche Steuerstrategie zur Sicherstellung der Drehmomentneutralität bei sprungartigen Luftzahländerungen, wie sie bei Anwendung der NOx-Speicherkatalysatortechnik unumgänglich sind, angewandt wird, wird die Temperatur des NOx-Speicherkatalysators herangezogen. Sie wird entweder direkt mittels eines im NOx-Speicherkatalysator angeordneten Temperatursensors gemessen (Festkörpertemperatur) oder sie wird mit Hilfe eines Temperaturmodells aus dem Signal des stromaufwärts des NOx-Speicherkatalysators 18 angeordneten, die Abgastemperatur erfassenden Temperatursensors 20 berechnet. Ein solches Temperaturmodell ist beispielsweise in dem deutschen Patent DE 197 14 293 C1 beschrieben.

Die auf diese Weise gemessene oder berechnete Temperatur T_KAT des Nox-Speicherkatalysators 18 wird mit applizierten Schwellenwerten T_KAT_SWO und T_KAT_SWU verglichen, die durch Versuche festgelegt wurden und in der Speichereinrichtung 24 abgelegt sind. Überschreitet die Temperatur T_KAT den oberen Schwellenwert T_KAT_SWO, so wird ein kombinierter Zündungs- und Füllungseingriff zur Drehmomentkompensation durchgeführt. Unterschreitet die Temperatur T_KAT den unteren Schwellenwert T_KAT_SWU, so wird ein alleiniger Zündungseingriff zur Drehmomentkompensation durchgeführt.

Die Figur 5a) zeigt in Form einer Kennlinie KF1 die Abhängigkeit des Verbrennungswirkungsgrades ηV der Brennkraftmaschine von dem Luftzahlsollwert λ. Diese Kurve hat ihr Maximum bei λ ≈0,9 und fällt in Richtung mageres Gemisch relativ stark ab. Wird der Luftzahlsollwert λ zur Regeneration des NOx-Speicherkatalysators von 1,5 auf 0,8 geändert, so ergibt sich auch eine Änderung des Verbrennungswirkungsgrades η_{V} um einen Wert, der mit Delta-Wirkungsgrad Δη_{V} bezeichnet ist. In Figur 5b) ist in Form einer Kennlinie KF2 die Abhängigkeit des Verbrennungswirkungsgrades η_{V} der Brennkraftmaschine von der Zündwinkelverstellung ZW dargestellt. Beide Kennlinienverläufe werden mittels Versuche experimentell ermittelt und sind in der Speichereinrichtung 24 der Steuerungseinrichtung 23 abgelegt. Der sich durch die Absenkung des Luftzahlsollwertes von 1,5 auf 0,8 ergebene Delta-Wirkungsgrad η_{V} aus Kennlinie KF1 ist Eingangsgröße für die Kennlinie KF2. Hieraus kann dann der Wert für die zugehörige Zündwinkelspätverstellung ermittelt werden.

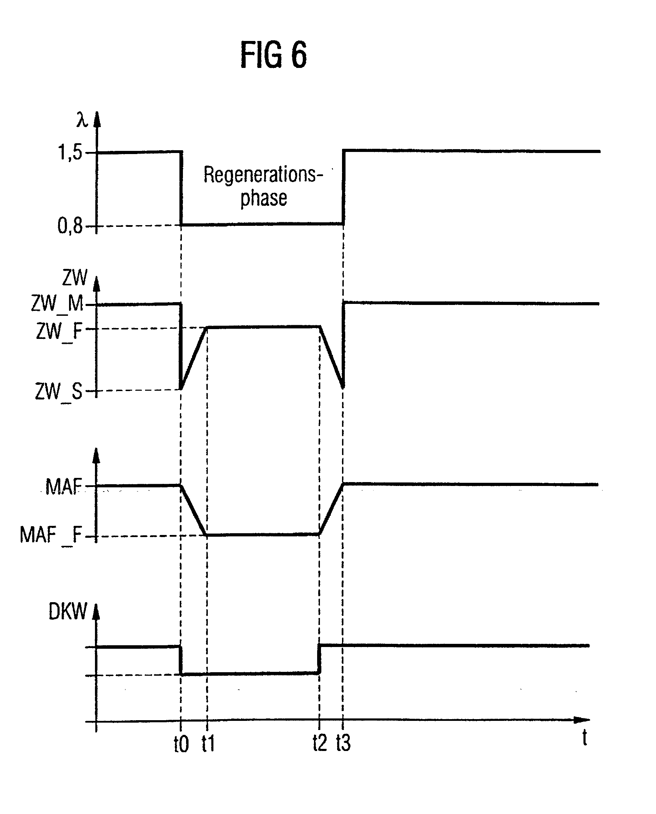

Die Vorgangsweise bei Verändern sowohl des Zündwinkels als auch der Zylinderfüllung wird anhand der Figur 6 erläutert, in der die qualitativen Verläufe von Drosselklappenwinkel DKW, Zylinderfüllung MAF, Zündwinkel ZW und Luftzahlsollwert λ jeweils über der Zeit t aufgetragen sind.

Eine kontinuierliche Änderung des Luftzahlsollwertes λ von einem Magerwert zu einem Fettwert bzw. umgekehrt ist aus Emissionsgründen nicht akzeptabel, da in diesem Fall unerwünschte NOx-Rohemissionsspitzen auftreten würden. Der Übergang zwischen diesen Luftzahlsollwerten λ muß somit sprungartig erfolgen.

Unmittelbar nach Anforderung einer Regenerationsphase für den NOx-Speicherkatalysator 18 zum Zeitpunkt t0 springt aufgrund einer Erhöhung der Einspritzmenge an Kraftstoff der Luftzahlsollwert λ von dem Magerwert λ = 1,5 auf den Fettwert λ =0,8. Da die Zylinderfüllung MAF aufgrund der Speicherwirkung des Saugrohres nicht sprungartig geändert werden kann, ist die Drehmomentkompensation durch einen sprungartigen Zündwinkeleingriff zu Beginn der Regenerationsphase vorteilhaft.

Deshalb wird zum Zeitpunkt t0 auch gleichzeitig der Zündwinkel ZW um jenen Betrag nach Spät verstellt ZW_S , daß sich der Wirkungsgrad der Verbrennung λ_{V} soweit absenkt, daß trotz geändertem Luftzahlsollwert λ keine Drehmomenterhöhung erfolgt. Die Drosselklappe 14 wird soweit geschlossen, d.h. der Drosselklappenwinkel DKW soweit verkleinert, bis sich über eine Rampenfunktion eine Zylinderfüllung MAF_F ergibt, bei der der optimale Zündwinkel ZW_F für Fettbetrieb eingestellt werden kann (Zeitpunkt t1), ohne daß sich durch die Änderung des Luftzahlsollwertes λ eine Drehmomentänderung ergibt.

Die Reduzierung des Drosselklappenwinkels DKW erfolgt in Abhängigkeit des Delta-Wirkungsgrades η_{V}. Der Zündwinkel ZW wird entsprechend der Abnahme der Zylinderfüllung MAF in Richtung Früh verstellt, bis der optimale Zündwinkel für Fettbetrieb ZW_F erreicht ist. Kurz vor Ende der Regenerationsphase (Zeitpunkt t2) wird die Zylinderfüllung MAF wieder durch Vergrößern des Drosselklappenwinkels DKW auf einen Wert erhöht, bei dem eine Wirkungsgradabnahme um den Wert Delta-Wirkungsgrad η_{V} durch Zündwinkelspätverstellung zur Drehmomentkompensation durchgeführt werden muß. Ist die Regenerationsphase abgeschlossen (Zeitpunkt t3), springt der Luftzahlsollwert λ wieder auf den Magerwert λ = 1,5 und der Zündwinkel springt auf den Optimalwert ZW_M für Magerbetrieb.

Im folgenden wird anhand der Figur 6 die Vorgangsweise bei alleinigem Zündungseingriff zur Drehmomentkompensation erläutert. Unterschreitet die Katalysatortemperatur T_KAT den unteren Schwellenwert T_KAT_SWU, so wird ein alleiniger Zündungseingriff zur Drehmomentkompensation durchgeführt. Durch Erhöhung der Einspritzmenge springt der Luftzahlsollwert λ vom Magerwert 1,5 auf den Fettwert 0,8. Gleichzeitig wird der Zündwinkel ZW um jenen Betrag (ZW_S) nach Spät verstellt, daß sich der Wirkungsgrad der Verbrennung Δη soweit absenkt, daß trotz geändertem Luftzahlsollwert λ keine Drehmomenterhöhung erfolgt. Der Drosselklappenwinkel DKW und somit auch die Zylinderfüllung MAF bleiben unverändert. Der Rücksprung in den Magerbetrieb erfolgt analog.

Liegt die Katalysatortemperatur T_KAT innerhalb des durch die beiden Schwellenwerte T_KAT_SWU und T_KAT_SWO definierten Intervalles, ist es vorteilhaft, einen kombinierten Zündungs-und Füllungseingriff zur Drehmomentkompensation durchzuführen, bei dem die Zylinderfüllung MAF nur teilweise reduziert wird und eine bestimmte Zündwinkelspätverstellung unterhalb des optimalen Wertes für den Fettzündwinkel ZW_F erhalten bleibt. In diesem Fall braucht man die Zylinderfüllung MAF nicht so weit zurücknehmen, weil eine gewisse Verschlechterung des Verbrennungswirkungsgrades Δη durch die Zündwinkelspätverstellung durchgeführt wird.

## Patentansprüche

1. Verfahren zum Regenerieren eines NOx-Speicherkatalysators (18),
- der im Abgastrakt (16) einer zumindest teilweise mit Luftüberschuß betriebenen Brennkraftmaschine (10) angeordnet ist und der
- NOx während einer Speicherphase adsorbiert, wenn die Brennkraftmaschine (10) mit einem mageren Luft-Kraftstoff-Verhältnis betrieben wird,
- der in einer Regenerationsphase unter Zugabe von Regenerationsmittel das gespeicherte NOx katalytisch umsetzt, wobei
- die Regenerationsmittel durch gegenüber der Speicherphase kurzzeitigen Betrieb der Brennkraftmaschine (10) mit stöchiometrischem oder fettem Luft-Kraftstoff-Verhältnis bereitgestellt werden,
- wobei die Temperatur (T_KAT) des NOx-Speicherkatalysators (18) ermittelt und mit vorgegebenen Schwellenwerten (T_KAT_SWU, T_KAT_SWO) verglichen wird und
- in Abhängigkeit des Ergebnisses des Vergleiches zur Beeinflußung der Katalysatortemperatur (T_KAT) während der Regenerationsphase ein Zündungseingriff durchgeführt wird, wobei
- bei Unterschreiten eines unteren Temperatur-Schwellenwertes (T_KAT_SWU) ein alleiniger Zündungseingriff durchgeführt wird,
- bei Überschreiten eines oberen Temperatur-Schwellenwertes (T_KAT_SWO) eine Kombination aus Zündungseingriff und Zylinderfüllungseingriff zur Erzielung einer Drehmomentneutralität zu Beginn und zu Ende der Regenerationsphase durchgeführt wird.

2. Verfahren nach Anspruch 1, **dadurch gekennzeichnet, daß** zu Beginn der Regenerationsphase (t0)
- der Zündwinkel (ZW) sprungartig in Richtung später Zündwinkel (ZW_S) verändert wird und anschließend über eine Rampenfunktion wieder in Richtung früher Zündwinkel zurückgeführt wird,
- die Zylinderfüllung (MAF) reduziert wird bis sich ein Wert (MAF_F) ergibt, bei dem der Zündwinkel (ZW_F) für fetten Betrieb der Brennkraftmaschine (10) eingestellt werden kann, ohne daß sich dabei eine Drehmomentänderung ergibt (Zeitpunkt t2),
- anschließend Zündwinkel (ZW) und Zylinderfüllung (MAF) konstant gehalten werden,
- kurz vor Ende der Regenerationsphase (Zeitpunkt t3) die Zylinderfüllung (MAF) angehoben und der Zündwinkel (ZW) über eine Rampenfunktion in Richtung später Zündwinkel (ZW_S) verschoben wird und
- bei Regenerationsende (Zeitpunkt t4) der Zündwinkel (ZW) sprungartig bis zum Wert (ZW_M) für mageren Betrieb angehoben wird.

3. Verfahren nach Anspruch 2, **dadurch gekennzeichnet, daß** aus dem Luftzahlsollwert (λ=1,5) vor der Regenerationsphase und dem Luftzahlsollwert (λ=0,8), mit dem die Regenerierung durchgeführt wird, ein Wert (Δη) für die Verschlechterung des Verbrennungswirkungsgrades der Brennkraftmaschine (10) ermittelt wird und die Veränderung des Zündwinkels (ZW) und der Zylinderfüllung (MAF) in Abhängigkeit dieses Wertes (Δη) erfolgt.

4. Verfahren nach Anspruch 3, **dadurch gekennzeichnet, daß** der Zusammenhang zwischen der Änderung des Luftzahlsollwertes (λ) und der Änderung des Verbrennungswirkungsgrades (Δη) experimentell ermittelt und in einer Kennlinie (KF1) einer Speichereinrichtung (24) einer die Brennkraftmaschine(10) steuernden Steuerungseinrichtung (23) abgelegt sind.

5. Verfahren nach Anspruch 1, **dadurch gekennzeichnet, daß** bei Unterschreiten eines unteren Schwellenwertes (T_KAT_SWU) der Zündwinkel (ZW) zu Beginn der Regenerationsphase (t0) sprungartig in Richtung späterer Zündwinkel (ZW_S) verändert wird, während der Regenerationsphase auf diesem Wert (ZW_S) gehalten wird und zu Ende der Regenerationsphase wieder sprungartig auf den für Magerbetrieb der Brennkraftmaschine (10) eingestellten Wert (ZW_M) angehoben wird.

6. Verfahren nach Anspruch 1, **dadurch gekennzeichnet, daß** bei einer Katalysatortemperatur (T_KAT) innerhalb der durch die beiden Schwellenwerte (T_KAT_SWU, T_KAT_SWO) definierten Intervalls ein kombinierter Zündungs- und Füllungseingriff zur Drehmomentkompensation durchgeführt wird, bei dem die Zylinderfüllung (MAF) nur teilweise reduziert wird und eine bestimmte Zündwinkelspätverstellung (ZW) unterhalb des Wertes für den Fettzündwinkel (ZW_F) erhalten bleibt.

7. Verfahren nach Anspruch 1, **dadurch gekennzeichnet, daß** die Katalysatortemperatur (T_KAT) unmittelbar mittels eines im Monolithen angeordneten Temperatursensors (201) erfasst wird.

8. Verfahren nach Anspruch 1, **dadurch gekennzeichnet, daß** die Katalysatortemperatur (T_KAT) aus dem Signal eines die Abgastemperatur stromaufwärts des NOx-Speicherkatalysators (18) erfassenden Temperatursensors (-20) mit Hilfe eines Temperaturmodells berechnet wird.

9. Verfahren nach Anspruch 1, **dadurch gekennzeichnet, daß** die Schwellenwerte (T_KAT_SWU, T_KAT_SWO) applikativ festgelegt werden und in einer Speichereinrichtung (24) einer die Brennkraftmaschine(10) steuernden Steuerungseinrichtung (23) abgelegt sind.

## Claims

1. Method for regenerating a NOx storage-type catalytic converter (18),
- which is located in the exhaust gas section (16) of an internal combustion engine (10) operated at least partially with excess air and which
- adsorbs NOx during a storage phase, when the internal combustion engine (10) is operated with a lean air-fuel ratio,
- which converts the stored NOx catalytically in a regeneration phase with the addition of a regeneration agent, whereby
- the regeneration agent is supplied by short-term operation, compared with the storage phase, of the internal combustion engine (10) with a stoichiometric or rich air-fuel ratio,
- whereby the temperature (T_KAT) of the NOx storage-type catalytic converter (18) is determined and compared with predefined threshold values (T_KAT_SWU, T_KAT_SWO) and
- depending on the result of the comparison, an ignition operation is carried out during the regeneration phase to modify the catalytic converter temperature (T_KAT), whereby
- if the result is below a lower temperature threshold value (T_KAT_SWU), a sole ignition operation is carried out,
- if the result is above an upper temperature threshold value (T_KAT_SWO), a combined ignition operation and cylinder filling operation is carried out to achieve torque neutrality at the start and end of the regeneration phase.

2. Method according to Claim 1, **characterised in that**, at the start of the regeneration phase (t0)
- the ignition angle (ZW) is modified stepwise in the direction of late ignition angles (ZW_S) and then returned via a ramp function in the direction of early ignition angles,
- the cylinder fill level (MAF) is reduced to a value (MAF_F) at which the ignition angle (ZW_F) can be adjusted for rich operation of the internal combustion engine (10), without resulting in a change of torque (time t2),
- ignition angle (ZW) and cylinder fill level (MAF) can be kept constant,
- shortly before the end of the regeneration phase (time t3) the cylinder fill level (MAF) is increased and the ignition angle (ZW) is changed via a ramp function in the direction of late ignition angles (ZW_S) and
- at the end of regeneration (time t4), the ignition angle (ZW) is increased stepwise to the value (ZW_M) for lean operation.

3. Method according to Claim 2, **characterised in that** a value (Δη) is determined from the target value for air ratio (λ = 1.5) before the regeneration phase and the target value for air ratio (λ = 0.8) at which regeneration is carried out, for the deterioration in the degree of combustion efficiency of the internal combustion engine (10), and **in that** the change in ignition angle (ZW) and cylinder fill level (MAF) is based on this value (Δη).

4. Method according to Claim 3, **characterised in that** the relationship between the change in the target value for air ratio (λ) and the change in the degree of combustion efficiency (Δη) is determined by experiment and stored in a characteristic line (KF1) in a storage device (24) of a control device (23) controlling the internal combustion engine (10).

5. Method according to Claim 1, **characterised in that**, if the result is below a lower threshold value (T_KAT_SWU), the ignition angle (ZW) is modified stepwise in the direction of later ignition angles (ZW_S) at the start of the regeneration phase (t0), maintained at this value (ZW_S) during the regeneration phase and increased again stepwise at the end of the regeneration phase to the value (ZW_M) set for lean operation of the internal combustion engine (10).

6. Method according to Claim 1, **characterised in that**, when the catalytic converter temperature (T_KAT) is within the interval defined by the two threshold values (T_KAT_SWU, T_KAT_SWO), a combined ignition and filling operation is carried out for the purpose of torque compensation, in which the cylinder fill level (MAF) is only partially reduced and a defined late ignition angle adjustment (ZW) is maintained below the value for the rich ignition angle (ZW_F).

7. Method according to Claim 1, **characterised in that** the catalytic converter temperature (T_KAT) is detected directly via a temperature sensor (201) located in the monolith.

8. Method according to Claim 1, **characterised in that** the catalytic converter temperature (T_KAT) is calculated from the signal from a temperature sensor (20) detecting the exhaust gas temperature upstream of the NOx storage-type catalytic converter (18) using a temperature model.

9. Method according to Claim 1, **characterised in that** the threshold values (T_KAT_SWU, T_KAT_SWO) are determined applicatively and stored in a storage device (24) of a control device (23) controlling the internal combustion engine (10).

## Revendications

1. Procédé de régénération d'un catalyseur accumulateur de NOx (18),
- qui est disposé dans le trajet de gaz d'échappement (16) d'un moteur à combustion interne (10) que l'on fait fonctionner au moins en partie avec un excès d'air et qui
- adsorbe les NOx, pendant une phase d'accumulation, si le moteur à combustion interne (10) fonctionne avec un rapport air-carburant pauvre,
- qui, dans une phase de régénération, transforme d'une manière catalytique les NOx accumulés, moyennant l'addition d'un agent de régénération,
- les moyens de régénération étant rendus prêts au moyen d'un régime du moteur à combustion interne (10) qui est bref en comparaison de la phase d'accumulation et qui présente un rapport air-carburant stoechiométrique ou riche,
- la température (T_KAT) du catalyseur accumulateur de NOx (18) étant déterminée et comparée à des valeurs de seuil (T_KAT_SWU, T_KAT_SWO) préfixées et,
- en fonction du résultat de la comparaison, une intervention sur l'allumage étant exécutée en vue d'influer sur la température de catalyseur (T_KAT) pendant la phase de régénération,
- une intervention sur l'allumage seule étant exécutée lors d'un franchissement vers le bas d'une valeur de seuil de température inférieure (T_KAT_SWU),
- une combinaison d'une intervention sur l'allumage et d'une intervention sur la charge de cylindre étant, lors d'un franchissement vers le haut d'une valeur de seuil de température supérieure (T_KAT_SWO), exécutée au début et à la fin de la phase de régénération en vue d'obtenir une neutralité de couple.

2. Procédé suivant la revendication 1, **caractérisé en ce qu'**au début de la phase de régénération (t0),
- l'angle d'allumage (ZW) est modifié par un saut vers un angle d'allumage plus en retard (ZW_S), puis est de nouveau ramené vers un angle d'allumage plus en avance par l'intermédiaire d'une fonction de rampe,
- la charge de cylindre (MAF) est réduite jusqu'à ce qu'il se présente une valeur (MAF_F) pour laquelle l'angle d'allumage (ZW_F) correspondant à un régime riche du moteur à combustion interne (10) peut être établi, sans qu'il se présente de ce fait une variation de couple (instant t2),
- puis, l'angle d'allumage (ZW) et la charge de cylindre (MAF) sont maintenus constants,
- peu avant la fin de la phase de régénération (instant t3), la charge de cylindre (MAF) est augmentée et l'angle d'allumage (ZW) est décalé vers un angle d'allumage plus en retard (ZW_S) par l'intermédiaire d'une fonction de rampe et,
- à la fin de régénération (instant t4), l'angle d'allumage (ZW) est augmenté par un saut jusqu'à la valeur (ZW_M) correspondant à un régime pauvre.

3. Procédé suivant la revendication 2, **caractérisé en ce qu'**à partir de la valeur de consigne d'indice d'air (λ = 1,5) avant la phase de régénération et de la valeur de consigne d'indice d'air (λ = 0,8) au moyen de laquelle la régénération est effectuée, une valeur (Δη) correspondant à la détérioration du rendement de combustion du moteur à combustion interne (10) est déterminée et la modification de l'angle d'allumage (ZW) et de la charge de cylindre (MAF) a lieu en fonction de cette valeur (Δη).

4. Procédé suivant la revendication 3, **caractérisé en ce que** la relation entre la variation de la valeur de consigne d'indice d'air (λ) et la variation du rendement de combustion (Δη) est déterminée expérimentalement et déposée dans une ligne caractéristique (KF1) d'un dispositif de mémoire (24) d'un dispositif de commande (23) commandant le moteur à combustion interne (10).

5. Procédé suivant la revendication 1, **caractérisé en ce que**, lors d'un franchissement vers le bas d'une valeur de seuil inférieure (T_KAT_SWU), l'angle d'allumage (ZW) est modifié par un saut vers un angle d'allumage plus en retard (ZW_S) au début de la phase de régénération (t0), est maintenu à cette valeur (ZW_S) pendant la phase de régénération et est de nouveau augmenté par un saut à la fin de la phase de régénération jusqu'à la valeur (ZW_M) établie pour un régime pauvre du moteur à combustion interne (10).

6. Procédé suivant la revendication 1, **caractérisé en ce que**, pour une température de catalyseur (T_KAT) située à l'intérieur de l'intervalle défini par les deux valeurs de seuil (T_KAT_SWU, T_KAT_SWO), il est exécuté une intervention combinée sur l'allumage et sur la charge de cylindre, correspondant à la compensation de couple, pour laquelle la charge de cylindre (MAF) n'est réduite qu'en partie et un décalage de retard d'angle d'allumage (ZW) déterminé reste maintenu au dessous de la valeur correspondant à l'angle d'allumage riche (ZW_F).

7. Procédé suivant la revendication 1, **caractérisé en ce que** la température de catalyseur (T_KAT) est détecteée directement au moyen d'un capteur de température (201) disposé dans le monolithe.

8. Procédé suivant la revendication 1, **caractérisé en ce que** la température de catalyseur (T_KAT) est calculée, au moyen d'un modèle de température, à partir du signal d'un capteur de température (20) détectant la température de gaz d'échappement en amont du catalyseur accumulateur de NOx (18).

9. Procédé suivant la revendication 1, **caractérisé en ce que** les valeurs de seuil (T_KAT_SWU, T_KAT_SWO) sont déterminées d'une manière applicative et déposées dans un dispositif de mémoire (24) d'un dispositif de commande (23) commandant le moteur à combustion interne (10).
